# EUROPEAN PATENT APPLICATION

(11) **EP 3 015 810 A1**
(43) Date of publication of application: **04.05.2016**
(21) Application number: 15192230.9
(22) Date of filing: 29.10.2015
(51) Int. Cl.: F28F 13/12, F28F 19/00, F23J 15/06

(54) **STOVE PROVIDED WITH A HEAT EXCHANGER WITH TURBULATORS**

(30) Priority: 30.10.2014 IT RM20140619
(71) Applicant: VESTA SRL, 03043 Cassino (FR) (IT)
(72) Inventor: Burdi, Andrea, 03043 Cassino (FR) (IT); Mentella, Alessia, 03043 Cassino (FR) (IT)
(74) Representative: Cardelli, Guido

(57) **Abstract**

A stove (1) provided with a heat exchanger with turbulators (13a, 13a, 13b, 13b) has a combustion chamber (2) with a heat exchanger (5) formed by communicating water chambers (6), in which a plurality of vertical flue gas pipes (8), which communicate with the combustion chamber (2), are water tightly immersed. The heat exchanger (5) is inside a covering structure (16) having a top wall (160) to which at least one turbulator (13a, 13a, 13b, 13b) is suspended in a respective vertical flue gas pipe (8). Each turbulator (13a, 13a, 13b, 13b) is configured so as to rotate and translate in the respective vertical flue gas pipes (8).

## Description

The present invention discloses a stove provided with a heat exchanger with turbulators.

The turbulator is an element inserted in a flue gas pipe of a heat exchanger, generally an air/water heat exchanger, with the aim of creating gas swirls and thus slowing down the flow of the flue gas, with a result of allowing greater heat transfer from the flue gas to the water. The flue gas heat decrease due to the contact, on one hand, with the metallic turbulators and, on the other, with the inner wall of the pipes, on the outer wall of which the water flows, causes the carbonaceous residues to stick to the pipes and the turbulators. The carbonaceous residues, hereinafter also referred to as soot, restrict heat transfer and lower the stove yield.

In general, most of the turbulators are manually operated to move back and forth, generally upward and downward, to clean the inner walls of the pipes and themselves by removing the accumulated soot.

The European patent application n. 10000912 in the name of Ariterm Sweden AB discloses a stove or pellet boiler, in which a mechanical device for cleaning the flue gas pipe removing the soot and improving the transmission of heat is activated on opening and closing of the hatch for the pellet supply. The device according to the cited application is substantially manual because a swinging arm, controlled by the opening of the hatch, moves up and down a spiral turbulator inside the flue gas pipe. The alternative displacement of the turbulator allows the soot to be removed from the surface of the flue gas pipe and to fall down on a collector. However, the device according to the cited patent application does not allow a control of the flue gas flow to obtain a desired heat exchange.

In this context, the technical task underlying the present invention is to propose a stove provided with a heat exchanger with turbulators which overcomes the drawbacks of the prior art mentioned above.

One object of the present invention is to allow an automatic cleaning of the turbulators and an adjustment of the flue gas flow.

Another object of the present invention is to propose a stove in which the operation of the heat exchanger is further adjusted by operating the turbulators provided inside the flue gas pipes.

In particular, an object of the invention is to allow a control of the flue gas flow in order to obtain a desired heat exchange.

Still more in particular, an object of the invention is to rotate the turbulators in order to make them translate upwards and downwards to modify the flue gas flow and adapt the operation of the stove to different states between maximum and minimum power.

The technical task mentioned and the objects specified are substantially achieved by a stove provided with heat exchanger with turbulators, comprising the technical features disclosed in one or more of the appended claims.

Further features and advantages of the present invention will become more apparent from the indicative, and therefore non-limiting, description of a preferred but not exclusive embodiment of a stove provided with heat exchanger with turbulators, as illustrated in the accompanying drawings in which:
- Figure 1 is a left end view of a stove according to the present invention;
- Figure 2 is a front view of the stove which is partially cross-sectioned according to a plane A-A in Figure 1;
- Figure 3 is a rear view of the stove which is partially cross-sectioned according to a plane B-B in Figure 1;
- Figure 4 is a partial front view of Figure 2 limited to the central area of the stove according to the present invention in which there are the turbulators;
- Figure 5 is a top plan view of the central zone of the heater in Figure 4;
- Figure 6 is an exploded perspective view similar to that in Figure 4, lower parts being omitted for clarity;
- Figure 7 is a side view of a pair of turbulators in Figure 6;
- Figure 8 is an exploded perspective view of the pair of turbulators in Figure 7; and
- Figures 9a, b, c, d are side views rotated relative to one another of 90° representing a profile cam employed in the stove according to the present invention.

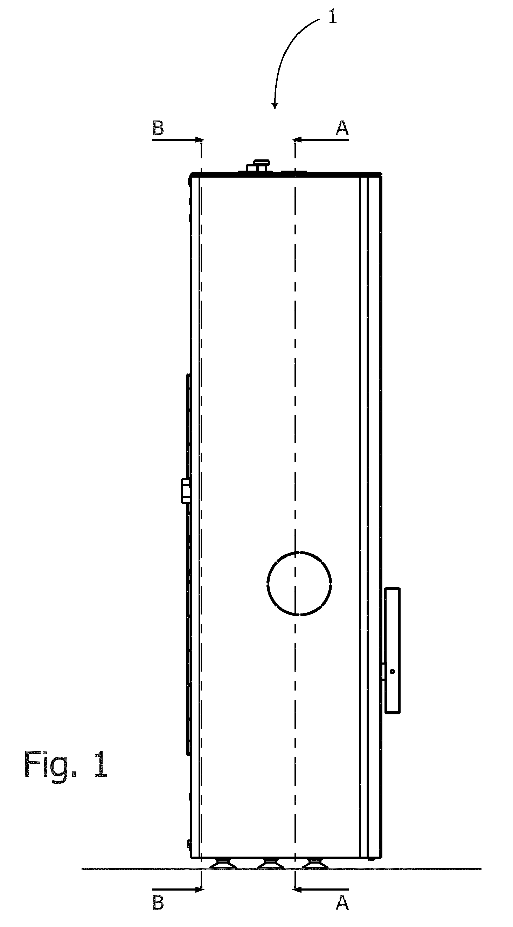

First, reference is made to Figures 1 to 3 which are a left end view of a stove provided with provided with a heat exchanger with turbulators according to the present invention, and a front view and a rear view of the stove partially sectioned according to a plane A-A and B-B in Figure 1, respectively.

The stove, generally indicated as 1, is in particular a pellet stove, but it could also be fed with another fuel. The stove 1 includes a combustion chamber 2 in which there is a brazier 3 and a pellet feeding tube 4 of a feeding device neither shown, nor described in detail. The combustion chamber 2 is delimited superiorly, posteriorly and laterally by a heat exchanger generally indicated as 5. The heat exchanger 5, which receives the heat from the combustion chamber, is formed by lateral water chambers 6 and an upper water chamber 7 communicating with each other. Present inside the upper water chamber 7 are baffles 12 which form a labyrinth for the water flow to be heated.

Immersed in the side water chambers 6 and in the upper water chamber 7 are a plurality of vertical water-proof flue gas pipes 8, within each of which is a turbulator 13a, 13a, 13b, 13b as it will be shown below. The vertical pipes 8, in number of four in the illustrated embodiment, communicate with the combustion chamber 2 through an opening 9 that may be common to a pair of vertical pipes 8 or single for each pipe; further the vertical pipes 8 communicate with each other through a lower transverse fume chamber 10. In the embodiment of the present invention there is provided a forced draught, but a convection of the flue gas toward a discharge in the upper part of the heat exchanger 5 could also be provided.

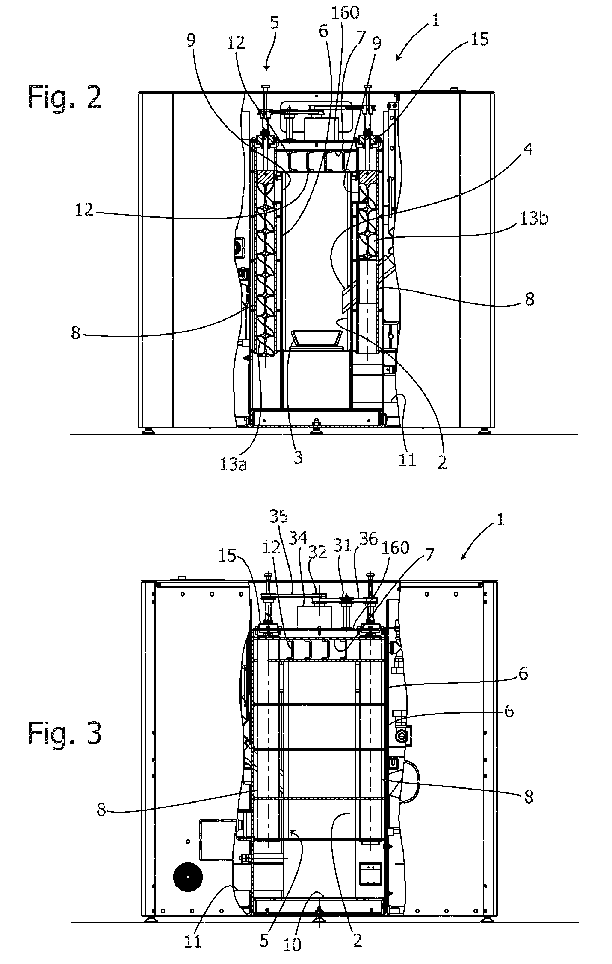

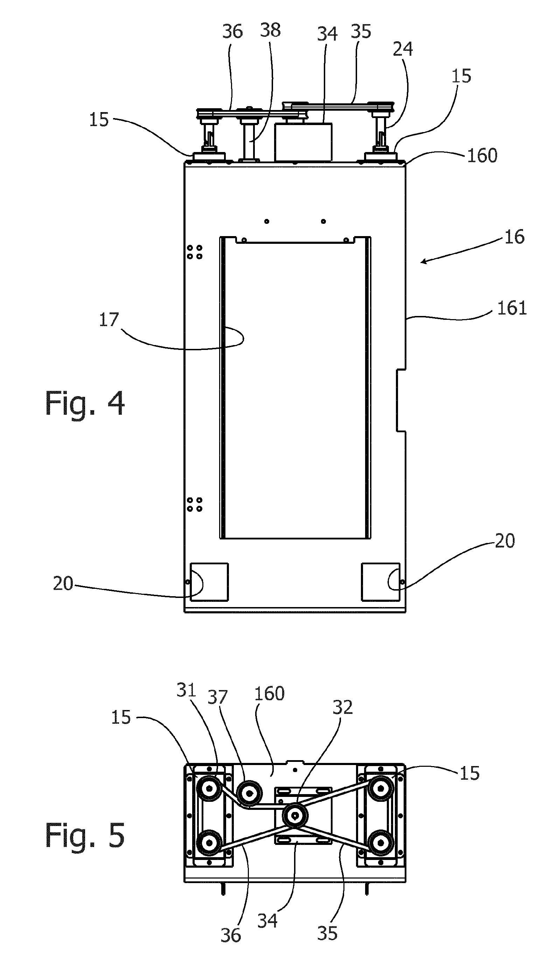

The heat exchanger 5 is located within a covering structure 16, best shown in Figures 4 to 6, which are a partial front view in Figure 2, limited to the central area of the stove and a top view and an exploded perspective view of the same, respectively. The covering structure 16, preferably made in a single C-shaped piece, has an upper wall 160, a vertical wall 161 and a bottom wall 162.

Hung at the upper part 160 of the covering structure 16 are a plurality of turbulators, in particular a pair of turbulators 13a, 13a, and a pair of turbulators 13b, 13b. Each turbulator is inserted in a respective vertical fuel gas pipe 8.

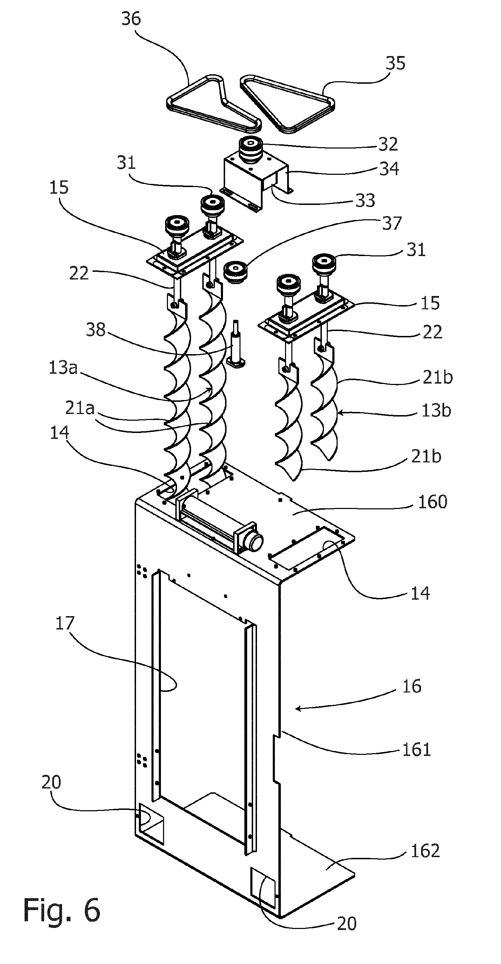

To this purpose, formed in the upper wall 160 are openings 14, 14 (Figure 6), in each of which a support element 15 is inserted, which is fixed on the periphery of the opening 14. The support element 15 will be described in greater detail below. The vertical wall 161 of the covering structure 16 has a cutout 17 generally closed with the glass in order to observe the flame created in the brazier 3 (Figure 2); in addition, the vertical wall 161 has lower openings 20, 20 for the collection of the ashes, neither shown nor described in greater detail.

As shown in Figures 2 and 6, the turbulators 13a, 13a, at the left hand in the figures, are longer than the turbulators 13b, 13b, at the right in the same figures, which are limited by the water-proof tube 4 for feeding the pellets passing through the lateral water chambers 6 of the heat exchanger 5. It should be understood that this choice of turbulators of different length is not binding because it depends on the particular configuration of the stove. In a different configuration the could happen or all the turbulators may be of the same length.

Each turbulator 13a, 13a, 13b, 13b is configured and arranged so as to rotate and translate or shift in the respective vertical flue gas pipe 8. In particular, each turbulator 13a, 13a, 13b, 13b includes a tape 21a, 21b wound in a spiral and a tape supporting stem 22 in the support element 15, respectively.

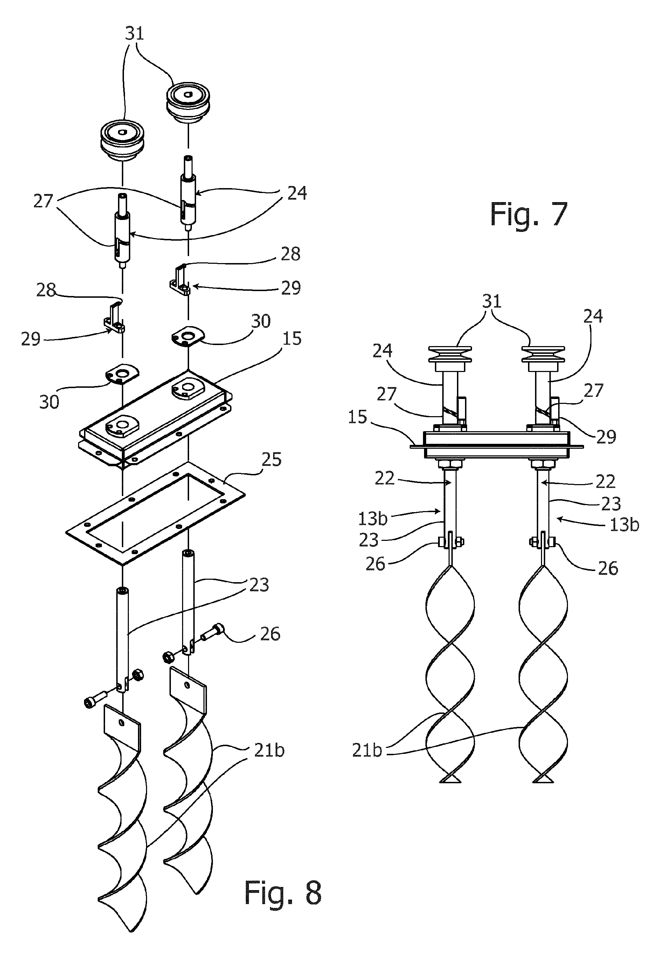

Reference is made also to Figures 7 and 8, which are a side view and an exploded perspective view, respectively, of the pair of turbulators 13b, 13b of Figure 6. The following description is valid also for the pair of turbulators 13a, 13a. Each stem 22 is preferably made of two distinct parts: a lower stem part 23 located below the upper wall 160 of the covering structure 16, and an upper stem part 24 located above the upper wall 160 of the covering structure 16, more precisely below and above the support element 15 which is supported through a gasket 25 on the upper wall 160.

The lower and upper stem parts 23, 24 are connected integrally to one another in the support element 15 to rotate together.

Their connection is made by a threaded coupling or by tight fit, or by any other means. Each lower stem part 23 is connected to the respective spiral tape 21b with a bolt 26 or by an equivalent means.

The upper stem part 24 is provided with a profile cam 27 having a pin 28 as a cam follower. The pin 28, best seen in Figure 8, is provided in the base of the core of an inverted T member 29 fixed, by means of a washer 30 of a heat-resistant plastic material on the support element 15 adjacent to the upper stem part 24. It is obvious that the shape of the inverted T member 29 carrying the pin 28 may be different; for example, the inverted T member 29 may be ring-shaped with a tooth protruding inward to engage the profile cam 27. The washer 30 has a pad function for cushioning the impact of the upper stem part 24 with the support element 15, and reducing also the noise thereof.

Keyed on each upper stem part 24 is a pulley generically indicated as 31. A double groove drive pulley 32 is keyed on the output shaft of an electric motor 33 (Figure 6) mounted by a bracket 34 on the upper wall 160 of the covering structure 16. The bracket 34 is adjustable in its position, as running on the pulleys 31 of the turbulators 13b, 13b, and on a first groove of the pulley 32 is a first belt 35, which is for example trapezoidal and rotates the turbulators 13b, 13b. Similarly, running on the pulleys 31 of the turbulators 13a, 13a and on a second groove of the drive pulley 32 is a second belt 36, which is for example trapezoidal and rotates the turbulators 13b, 13b. A further pulley 37 that is keyed on an idle shaft 38 acts as a belt tensioner for the belt 36. What is herein described is a device for transmitting the motion provided on the upper wall of the heat exchanger to rotate simultaneously the two pairs of turbulators 13a, 13a and 13b, 13b. It should be evident that the transmission may still be flexible but made by means of chains, rather than by belts, or it is made by gears.

The rotation of the turbulators regulates the flow of flue gas in the heat exchanger 5 as desired. When the turbulators are at the top, there is a minor slowing down of the flue gas and thus a reduced resistance to their movement towards the flue gas pipe. This configuration is suitable for a minimum operational state. When all the turbulators are lowered, the slowing down of flue gas is maximum. This configuration is suitable for the maximum operational state of the stove.

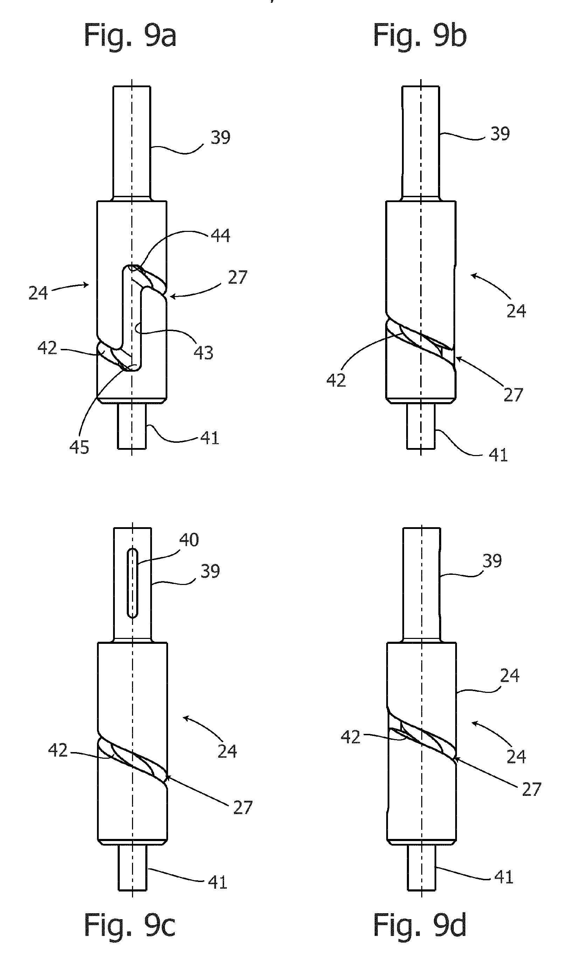

The cleaning effect of the vertical flue gas pipes 8 and the same turbulators 13a, 13a and 13b, 13b is obtained by means of a vertical movement to and fro conferred to the turbulators themselves by the profile cam 27 provided in the upper part 24 of each turbolator holding stem 23. The shape of the profile cam 27 is shown in Figures 9a, b, c, d which are side views rotated relative to one another by 90° of the upper stem part 24 to represent the profile cam employed in the stove according to the present invention.

Each upper stem part 24 has a top section 39 in which a groove 40 for tab (figure 9c) is formed for the purpose of keying a pulley 31 and a lower section 41 for connecting the lower stem part 23 as described above. The profile cam 27 on the upper stem part is formed as a continuous peripheral groove having a 360 degree sinusoidal tract 42 and a straight tract 43. The sinusoidal tract 42 of the profile cam 27 is coaxial with the upper stem part 24 and has an upper end 44 and a lower end 45 which are joined by means of the straight tract 43.

In operation, under the command of an electronic control unit of the stove, here neither described nor illustrated, the electric motor 33 is actuated that rotates the turbulators by means of the flexible transmission system having the pulleys 31, 32, 37 and the belts 35, 36. The stems 22 of the turbulators 13a, 13b are forced into their rotation to be raised and lowered, thanks to the elasticity of the belts 35, 36, because of the profile cams 27 on the upper stem parts 24 and of the cam followers fixed on the support elements 15.

The particular profile conformation of the profile cam 27 causes the turbulators raise for 360 degrees of the sinusoidal tract 42 and move quickly down for the straight tract 43. In this way, soot is scrubbed from the vertical pipes 8 and the turbulators themselves 13a, 13b. At the same time, thanks to the rotation of the turbulators, which can be stopped in any position, the flow of flue gas is adjusted and the performance of the heat exchanger, and therefore of the stove, is improved.

In the stove according to the invention, the water intended to be heated by the flue gas begins to flow from the upper water chamber 7, where the baffles 12 are, and then it moves downwards from that point. The same happens to the flue gas which enters the openings 9 and is sucked down by forced draught by means of a not shown flue gas extractor.

As previously mentioned, the stove may have a natural forced draught and, similarly, cold water may enter bottom and exit upwards, without entailing any change to the turbulators as described above.

## Claims

1. A stove (1) equipped with a heat exchanger having turbulators (13a, 13a, 13b, 13b), the stove (1) comprising a combustion chamber (2) having said heat exchanger (5) formed by communicating water chambers (6) in which a plurality of vertical flue gas pipes (8) communicating with the combustion chamber (2) are water tightly immersed, the heat exchanger (5) being within a covering structure (16) having an upper wall (160) from which at least one turbulator (13a, 13a, 13b, 13b) is suspended in a respective vertical flue gas pipe (8), **characterized in that** each turbulator (13a, 13a, 13b, 13b) is configured so as to rotate and translate in each respective vertical flue gas pipe (8).

2. The stove (1) according to claim 1, wherein each turbulator (13a, 13a, 13b, 13b) comprises at least a tape (21a, 21b) and a tape supporting stem (22) having a lower stem part (23) located below said upper wall (160) of the covering structure (16), and an upper stem part (24) located above said upper wall (160) of the covering structure (16), the lower stem part (23) and the upper stem part (24) being connected integrally to one another in a support element (15) in order to rotate together, the upper stem part (24) being provided with a profile cam (27) having, as a cam follower, a pin (28) fastened to said support element (15).

3. The stove (1) according to claim 2, wherein formed on the upper wall (160) of the covering structure (16) is at least one opening (14) which is closed by said support element (15).

4. The stove (1) according to claim 2, wherein provided on the upper wall (160) of the covering structure (16) is a motion transmitting device that is engaged with the upper stem parts (24) in order to rotate the turbulators (13a, 13a, 13b, 13b), said motion transmitting device comprising an electric motor (33) whose drive shaft has a keyed double groove pulley (32) that is connected by at least one belt (35, 36) to a plurality of pulleys (31) of the respective turbulators (13a, 13a, 13b, 13b).

5. The stove (1) according to claim 2, wherein said profile cam (27) on said upper stem part (24) is formed as a continuous peripheral groove having a 360 degree sinusoidal tract (42) concentrical with the upper stem part (24), and upper and lower ends (44, 45), said upper and lower ends (44, 45) being joined by a straight tract (43) of the continuous peripheral groove.

6. The stove (1) according to claim 2, wherein said lower stem part (23) and said upper stem part (24) are connected together by means of a threaded coupling.

7. The stove (1) according to claim 2, wherein said lower stem part (23) and said upper stem part (24) are connected together by means of a tight fit.

8. The stove (1) according to claim 2, wherein each turbulator (13a, 13a, 13b, 13b) consists of at least a tape (21a, 21b) wound in a spiral.

9. The stove (1) according to claim 1, wherein said stove (1) is a pellet stove.
